Europäisches Patentamt

European Patent Office

Office européen des brevets

(11) Publication number: **0 191 939**
**A1**

(12) # EUROPEAN PATENT APPLICATION

(21) Application number: **85116192.7**

(22) Date of filing: **18.12.85**

(51) Int. Cl.⁴: **G 06 F 13/28**

(30) Priority: **20.12.84 US 684325**

(43) Date of publication of application:
**27.08.86 Bulletin 86/35**

(84) Designated Contracting States:
**BE DE FR GB NL**

(71) Applicant **HONEYWELL INC.**
**Honeywell Plaza**
**Minneapolis Minnesota 55408(US)**

(72) Inventor: **Pantry, William Jack**
**11960 Northwest Old Quarry Road**
**Portland Oregon 97229(US)**

(72) Inventor· **Baumann, Burke Brian**
**9604 North 53rd Avenue**
**Glendale Arizona 85302(US)**

(74) Representative: **Herzbach, Dieter et al,**
**Honeywell Europe S.A. Holding KG Patent- und**
**Lizenzabteilung Kaiserleistrasse 55 Postfach 184**
**D-6050 Offenbach am Main(DE)**

(54) **Data processing bus system.**

(57) The data processing system has at least one memory unit (15) operatively connected to a memory bus (11), and further has an input/output (I/O) bus controller (45) for interfacing at least one peripheral device to the data processing system. The data processing system comprises a first bus (45, 50) which provides a first transmission medium between the peripheral device and the memory bus. A second bus (70), provides a second transmission medium between a CPU (60) and the memory bus (11). A logic element (40), interposed between the first and second bus, and the memory bus, interfaces the first and second bus to the memory bus in response to request signals from the first and second bus.

Fig. 2

Ȱ191939

HONEYWELL INC.                    December 16, 1985
Honeywell Plaza                  I2000033 EP
Minneapolis, MN 55408 USA        Hz/ep


Data Processing System

This invention relates to a data processing system according to the preamble of claim 1.

In earlier systems, a single bus for all instruction
fetches, operand read/writes, and peripheral I/O was
utilized. The single bus allowed for no degree of simultaneity and therefore only a single memory cycle at a
time could be serviced, i.e., instruction fetches,
operand read/writes, and peripheral I/O.

It is therefore an object of the present invention to
provide a data processing system for essentially simultaneous instruction fetch and peripheral I/O operations.

This object is achieved according to the characterizing
features of claim 1. Further advantageous embodiments of
the inventive system may be taken from the subclaims.

Therefore, there is supplied by the present invention, a dual bus data processing system. The data processing system, has at least one memory unit operatively connected to a memory bus, and further has an input/output (I/O) bus controller for interfacing at least one peripheral device to the data processing system. The data processing system comprises a first bus which is operatively connected to the peripheral device, for providing a first transmission medium between the peripheral device and the memory bus. A CPU is also included for processing information. A second bus, operatively connected to the CPU provides a second transmission medium between the CPU and the memory bus. A logic element, interposed between the first bus and the second bus, and the memory bus, interfaces the first bus and the second bus to the memory bus in response to request signals from the first and second bus.

The present invention will become more apparent when taken in conjunction with the following description and attached drawings, wherein like characters indicate like parts, and where

Figure 1 shows a block diagram of a single bus system of the prior art;

Figure 2 shows a block diagram of a data processing system of the preferred embodiment of the present invention;

Figure 3 shows a functional block diagram of a memory bus controller of the data processing system of Figure 2; and

Figure 4 shows a partial logic block diagram of the memory bus controller of Figure 3.

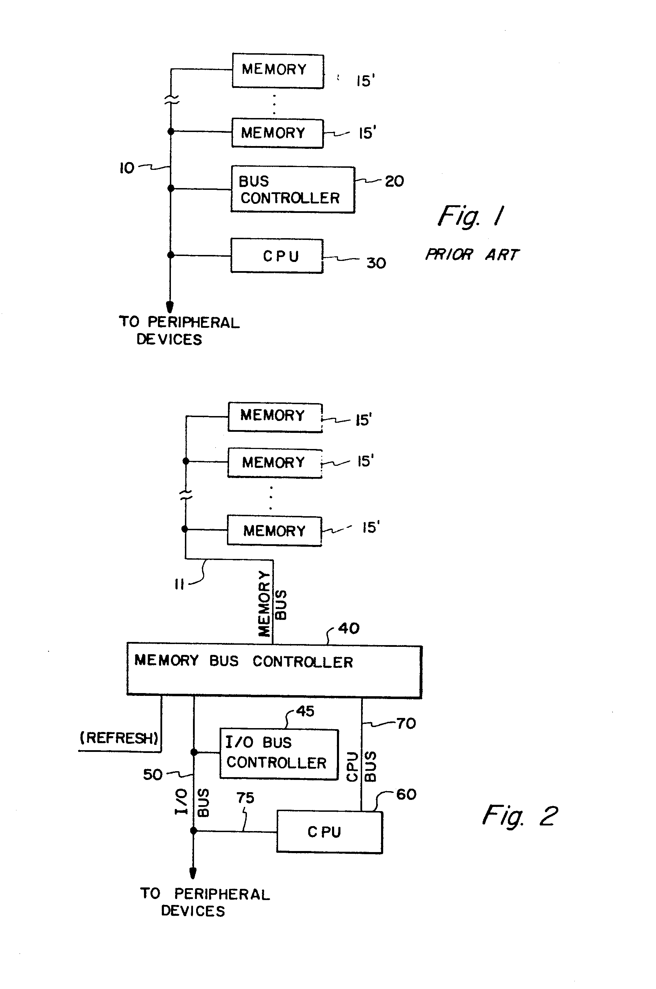

Referring to Figure 1, there is shown a block diagram of a data processing system showing a single bus system of the prior art. A single bus 10, has attached thereto, a memory 15, shown here as a plurality of memory units 15', a bus controller 20, and a CPU 30. Also attached to the bus 10 is a variety of peripheral devices (not shown). Communication between the subsystems attached to the bus 10 and the peripheral devices, occurs via the bus 10. The single bus 10 allows for no degree of simultaneity and therefore only a single memory cycle at a time can be serviced, i.e., instruction fetches, operand read/writes, and peripheral input/output (I/O).

Referring to Figure 2, there is shown a block diagram of a data processing system of the preferred embodiment of the present invention. A memory bus controller 40 is operatively connected to a memory bus 11, the memory bus 11 having attached thereto a memory 15 which includes a plurality of memory units 15'. An I/O bus controller 45 is operatively connected to a plurality of peripheral devices (not shown), to an I/O bus 50, the I/O bus 50 being operatively connected to the memory bus controller 40. A CPU 60 is operatively connected to the memory bus controller 40 via a second bus, the CPU bus 70. The CPU 60 is also operatively connected to the I/O bus 50 via line 75 for communicating control information directly to the peripheral devices. The memory bus controller 40 will be described in detail hereinunder. Although only two buses are shown herein, i.e., I/O bus 50 and CPU bus 70, there can be additional bus inputs to the memory bus controller 40. For example, for memory 15 comprising dynamic RAMS requiring a refresh cycle, a REFRESH input can be included and can be given an appropriate priority by the memory bus controller 40, the operation of the memory bus controller 40 to be described further hereinunder.

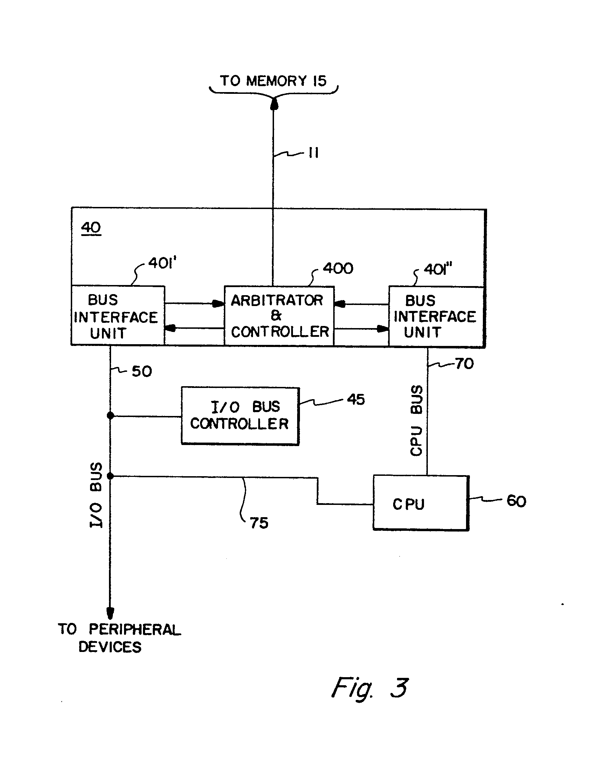

Referring to Figure 3, there is shown a functional block diagram of the memory bus controller 40. The memory bus controller 40 provides the interface to the memory 15 via the memory bus 11 for the I/O bus 50 and the CPU bus 70. The memory bus controller 40 compries an arbitrator and controller unit 400, and a plurality of bus interface units 401 for interfacing with each bus, i.e., a bus interface unit 401' for the I/O bus 50, and a bus interface unit 401" for the CPU bus 70. The memory bus controller 40 is operatively connected to the memory 15 via memory bus 11, and the logic of the bus interface unit 401 and the arbitrator and controller unit 400 provides the interface for the I/O bus 50 and the CPU bus 70.

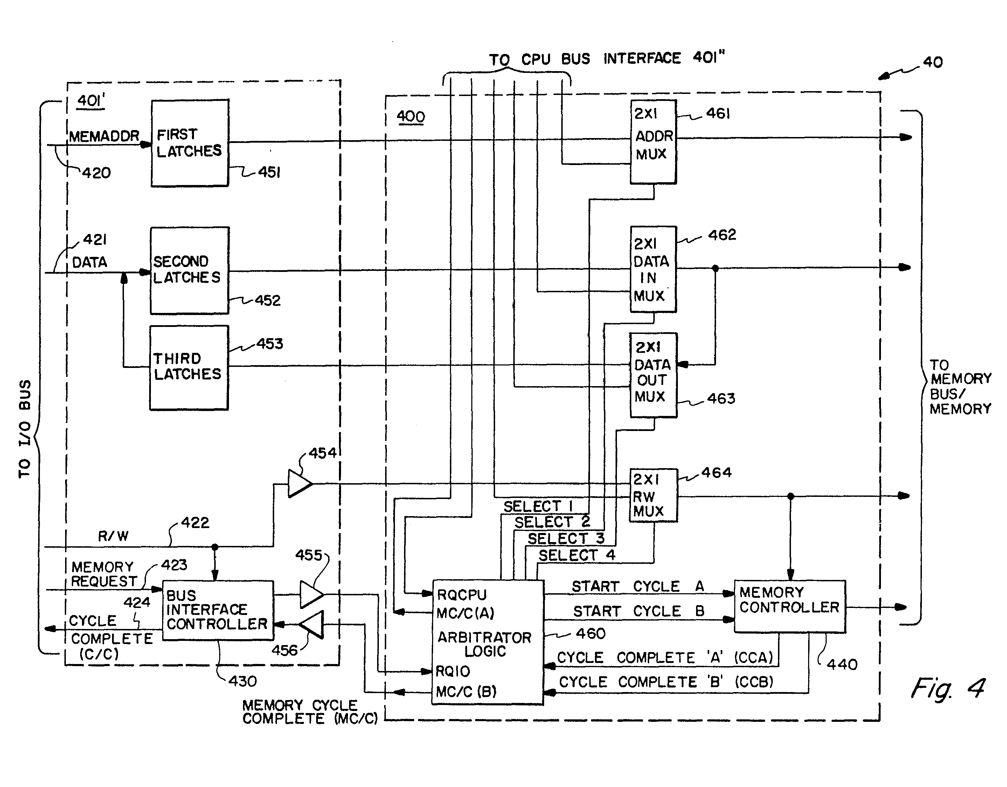

The operation of the memory bus controller 40 will now be described. Referring to Figure 4, there is shown a partial logic block diagram of the memory bus controller 40 (only a single bus interface unit 401 is shown, namely, the bus interface unit 401' for the I/O bus 50). The I/O bus 50, as is true of buses in general, contains address lines, data lines, and control lines. The memory address desired to be communicated with is contained on address lines, MEMADDR, 420, and the data lines, DATA, 421 contains the data associated with the address contained on address lines 420.  The data will be present on the data lines 421 after it is read from memory 15, or if data is to be written into memory 15, the data will be on the data lines 421 and will be written into the memory 15 at the address specified on address lines 420.  The control lines of I/O bus 50 includes a read/write line, R/W, 422 which specifies if the memory 15 is to be read or written.  A MEMORY REQUEST line 423, which is a request from the I/O bus controller 45 is connected to I/O bus 50 and signifies that there is a memory request on the bus.  A cycle complete line, C/C, 424, is an acknowledge signal from a bus interface controller 430 associated with the I/O bus 50 signifying to the I/O bus controller 45 that the bus cycle is completed.  The bus interface controller 430 is part of the bus interface unit 401'. The bus interface unit 401' also contains the line drivers/receivers 454, 455, 456, to interface the control signals of the I/O bus 50 with the arbitrator and controller 400.

The arbitrator and controller logic 400 interfaces with the memory bus 11, and includes a memory controller 440, and also interfaces with the CPU bus interface unit 401". As will subsequently become apparent to those skilled in the art, the bus protocols may be different, the bus timing may be different, and the bus interfaces can be different.    However, the interface to the arbitrator and controller unit 400 is the same.

Bus interface unit 401 comprises a block of first latches 451 for holding the memory address contained on address lines 420.   A block of second latches 452, and a block of third latches 453 is utilized for data.   Data to be written into memory 15 contained on data lines 421 is temporarily stored in second latches 452.   Data to be read from memory 15 is transmitted from memory 15 and temporarily stored in third latches 453 for subsequent transmission to the I/O bus 50 via data lines 421.   In the preferred embodiment of the present invention a data word is 24 bits wide, hence, the latches 452, 453, are 24-bits wide, sufficient to store a data word.

The arbitrator and controller unit 400 includes a 2X1 ADDR MUX 461 operatively connected to the first latches 451 of the bus interface unit 401', and to the first latches, or equivalent (not shown), of the bus interface unit 401".   The ADDR MUX 461 selects the address data from the bus interface unit 401 granted access to the memory bus 11, the selection being controlled by a select signal, SELECT1, from an arbitrator logic unit 460 which is also included as part of the arbitrator and controller unit 400.   A 2X1 DATAIN MUX 462 is operatively connected to the second latches 452 of bus interface unit 401', and to second latches, or equivalent (not shown), of the bus interface unit 401". The DATAIN MUX 462 selects the data from the bus interface unit 401 granted access to the memory bus 11, the selection being controlled by the select signal, SELECT2, from the arbitrator logic unit 460. A 2X1 DATAOUT MUX 463 is operatively connected to the third latches 453 of bus interface unit 401', and to third latches, or equivalent (not shown), of the bus interface unit 401". The DATAOUT MUX 463 effectively selects the bus interface unit 401 which is to receive data read from the memory 15, the selection being controlled by the select signal, SELECT3, from the arbitrator logic unit 460. A 2X1 R/W MUX 464 receives the read/write (R/W) control signal from the bus interface unit 401' and from a bus interface unit 401" (not shown). The R/W MUX 464 selects the read/write control signal to be transmitted to the memory bus 11 under control of the arbitrator logic unit 460 via the select signal, SELECT4. The arbitrator logic unit 460 receives a request signal, RQIO from the I/O bus 50 via the bus interface controller 430, and also receives a request signal, RQCPU, from the CPU bus 70 via a bus interface controller associated with the CPU bus 70 (not shown). The arbitrator logic unit 460 grants access to the memory 15 to a single requestor at a time in response to the request signals. If the request signals arrive simultaneously, or nearly simultaneous, the arbitrator logic unit 460 grants access to the memory bus (i.e., grants the request) to one of the requestors on a priority basis. The arbitrator logic unit 460 interfaces to the memory controller 440 and indicates to the memory controller 440 that a request has been granted and a memory cycle is about to start, via the START CYCLE A signal or START CYCLE B signal. When the memory 15 has completed the actual read/write, the memory controller 440 indicates to the arbitrator logic unit 460 that the actual memory cycle is completed via the control signals CYCLE COMPLETE A (CCA) and CYCLE COMPLETE B (CCB). The arbitrator logic, in turn, transmits a control signal, MEMORY CYCLE COMPLETE (MCC) to the interface bus controller of the selected bus indicating completion of post memory cycle activity, such as parity checking, error detection and correction, etc. A more detailed description and operation of the arbitrator logic unit 460 can be obtained from the related EP patent application, 85 116191.9 , (I2000041), "Arbitration Circuit".

While there has been shown what is considered to be the preferred embodiment of the invention, it will be manifest that many changes and modifications can be made therein without departing from the essential spirit and scope of the invention. It is intended, therefore, in the annexed claims, to cover all such changes and modifications which fall within the true scope of the invention.

0191939

Claims:

1. A data processing system, having at least one memory unit (15) operatively connected to a memory bus (11), and further having at least one peripheral device interfaced to said data processing system, c h a r a c t e r - i z e d   b y:

   a) first bus means (45, 50), operatively connected to said peripheral device, for providing a first transmission medium between said peripheral device and said memory bus (11);

   b) CPU means (60) for processing information;

   c) second bus means (70), operatively connected to said CPU means (60), for providing a second transmission medium between said CPU means and said memory bus (11); and

   d) logic means (40), interposed between said first bus means (45, 50) and said second bus means (70), and said memory bus (11), for interfacing said first bus means and said second bus means to said memory bus in response to request signals from said first and second bus means.

2. A data processing system, according to Claim 1, c h a r - a c t e r i z e d   i n   t h a t   said CPU means (60) is further operatively connected (25) to said first bus means (45, 50).

3. A data processing system, according to Claim 1, c h a r - a c t e r i z e d   i n   t h a t   said logic means (40) comprises:

   a) a plurality of bus interface means (401), each bus interface means operatively connected to a corresponding bus means, for providing a common output; and

   b) arbitrator means (400), operatively connected to the common output of each of said bus interface means (401), for arbitrating requests in response to the request signals from each of said bus interface means thereby permitting a selected bus means to access said memory units.

0191939

4. A data processing syste, according to Claim 2, c h a r a c t e r i z e d  i n  t h a t  said logic means comprises:

a) a plurality of bus interface means (401), each bus interface means operatively connected to a corresponding bus means, for providing a common output; and

b) arbitrator means (400), operatively connected to the common output of each of said bus interface means, for arbitrating requests in response to the request signals from each of said bus interface means thereby permitting a selected bus means to access said memory units.

Fig. 1

PRIOR ART

TO PERIPHERAL
DEVICES

Fig. 2

TO PERIPHERAL
DEVICES

Honeywell

0191939

Fig. 3

TO CPU BUS INTERFACE 401"

40

401'

MEMADDR 420

FIRST LATCHES 451

2X1 ADDR MUX 461 — TO MEMORY BUS/ MEMORY

400

421 DATA

SECOND LATCHES 452

THIRD LATCHES 453

2X1 DATA IN MUX 462

2X1 DATA OUT MUX 463

454

TO I/O BUS

R/W 422

MEMORY REQUEST 423

424 CYCLE COMPLETE (C/C)

BUS INTERFACE CONTROLLER 430

455

456

2X1 RW MUX 464

SELECT 1
SELECT 2
SELECT 3
SELECT 4

RQCPU
MC/C(A)

ARBITRATOR LOGIC 460

RQIO
MC/C (B)

START CYCLE A
START CYCLE B

MEMORY CONTROLLER 440

CYCLE COMPLETE 'A' (CCA)
CYCLE COMPLETE 'B' (CCB)

MEMORY CYCLE COMPLETE (MC/C)

3/3

0191939

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-4 240 138  (CHAUVEL)<br>* Column 1, lines 41-60; column 2, line 18 - column 3, line 31; column 4, line 36 - column 5, line 33; figures 1,5,7,8 * | 1,3 | G 06 F  13/28 |
| Y | | 2 | |
| A | | 4 | |
| | --- | | |
| Y | US-A-4 245 301  (ROKUTANDA)<br>* Column 3, lines 20-48; column 3, line 66 - column 4, line 18; figures 3,5 * | 2 | |
| | --- | | |
| P,X | EP-A-0 141 302  (CIACCI)<br>* Page 7, line 1 - page 9, line 9; claim 3; figure 1 * | 1-4 | TECHNICAL FIELDS SEARCHED (Int Cl 4) |
| | ----- | | G 06 F  13/28<br>G 06 F  13/36<br>G 06 F  13/18<br>G 06 F  13/40 |

The present search report has been drawn up for all claims

| Place of search | Date of completion of the search | Examiner |
|---|---|---|
| THE HAGUE | 20-03-1986 | CHUGG D.J. |